# EUROPÄISCHE PATENTSCHRIFT

(11) **EP 1 010 507 B1**
(45) Veröffentlichungstag und Bekanntmachung des Hinweises auf die Patenterteilung: **15.02.2006**
(21) Anmeldenummer: 99123269.5
(22) Anmeldetag: 29.11.1999
(51) Int. Cl.: B27L 11/00, B27G 13/04, B23C 5/22, B27G 13/10

(54) **Messerwerkzeugkopf sowie Messer und Messerhalter hierfür**
Cutter tool head as well as a knife and a knife holder therefor
Tête de coupe ainsi que couteaux et porte-couteaux correspondant

(30) Priorität: 18.12.1998 DE 19858740
(43) Veröffentlichungstag der Anmeldung: 21.06.2000
(73) Patentinhaber: Paul Güls Maschinenbau, 71577 Grosserlach (DE)
(72) Erfinder: Güls, Martin, 71540 Murrhardt (DE)
(74) Vertreter: Patentanwälte Ruff, Wilhelm, Beier, Dauster & Partner

(56) Entgegenhaltungen:
- DE-A- 4 405 783
- US-A- 3 875 984
- US-A- 4 396 315
- US-A- 4 669 516
- US-A- 5 044 570

## Beschreibung

Die Erfindung bezieht sich auf einen Messerwerkzeugkopf nach dem Oberbegriff des Anspruchs 1.

Derartige mit einem oder mehreren geeigneten Messern bestückten Werkzeugköpfe finden beispielsweise Anwendung für die Zerspanung von Holz, insbesondere zur Zerspanung der seitlichen Segmente von Holzstämmen in Profilzerspanern und Zerhakkern zur Herstellung von Papierhackschnitzeln. Meist sind an einem rotierenden Werkzeugkopf sowohl umfangsseitige Messer als Hackmesser wie auch stirnseitige Messer als Planmesser eingesetzt und bilden so ein entsprechendes Zerspannungsmessersystem. Besonders bei den Planmessern, welche die endgültige Oberfläche an Brettern und Balken herstellen, ist eine genaue Positionierung der Messer von hoher Bedeutung. Konventionelle Messer werden hierzu häufig mit am Messer angebrachten Stellschrauben in einer entsprechenden Einstellvorrichtung voreingestellt. Alternativ ist es bekannt, die Messer durch entsprechende Formgebung zu indexieren, so daß sie nur in einer bestimmten Lage am Messerhaltebereich des Werkzeugkopfes festlegbar sind. Konstruktiv bedingtes Spiel kann hierbei jedoch zu Ungenauigkeiten und damit zu einer nicht sehr zufriedenstellenden Oberfläche der Bretter bzw. Balken führen. Neben früher ausschließlich verwendeten Messern mit nur einer Schneidkante kommen in den letzten Jahren vermehrt sogenannte Wendemesser zum Einsatz, die auf gegenüberliegenden Seiten mit je einer Schneidkante versehen sind und nach Abnutzung der einen Schneidkante in einer um 180° gewendeten Lage zur Nutzung der anderen Schneidkante am Werkzeugkopf befestigt werden können. Herkömmlicherweise werden die Messer meist mittels Klemmstücken, die in den Werkzeugkopf geschraubt werden, klemmend gegen den Messerhaltebereich gedrückt und auf diese Weise dort gehalten. Anstelle von Rotationswerkzeugköpfen, die im Betrieb rotieren, können auch feststehende, messerbestückte Werkzeugköpfe verwendet werden, an die das zu bearbeitende Werkstück rotierend oder anderweitig bewegt herangefahren wird.

Ein Werkzeugkopf der eingangs genannten Art für einen Profilzerspaner mit Hackmessern und einem Kreissägen-Ringelement als Schlichtwerkzeug ist in der Patentschrift DE 195 13 699 C1 offenbart.

Bei einem gattungsgemäßen Werkzeugkopf, wie er in der Patentschrift US 5 271 440 offenbart ist, sind Wendemesser mit planer Messerkontaktfläche und verzahnter Profilierung der gegenüberliegenden Messervorderfläche vorgesehen. Die Messer werden gegen den Messerhaltebereich des Werkzeugkopfes mittels eines Klemmstücks klemmend gehalten, das an den Werkzeugkopf bzw. ein Messerhaltestück desselben angeschraubt wird und mit einer Kontaktfläche, die mit einer korrespondierenden, verzahnten Oberflächenprofilierung versehen ist, gegen die verzahnte Messervorderfläche andrückt.

Bei einem Werkzeugkopftyp, wie er in den Patentschriften US 4 997 018, US 5 146 963, US 5 271 442, US 5 333 659 und US 5 511 597 beschrieben ist, werden Messer verwendet, die im Mittenbereich ihrer Kontaktseite eine flache, im Querschnitt rechteckförmige Ausnehmung aufweisen. Der Ausnehmungsrand endet auf diese Weise nach außen hin im wesentlichen senkrecht zu einer anschließenden freien Spanfläche des Messers. In die Ausnehmung greift eine am Messerhaltebereich ausgebildete, korrespondierende Nase ein. Ein am Werkzeugkopf bzw. einem Messerhaltestück desselben anzuschraubendes Klemmstück drückt gegen die halterabgewandte Messervorderfläche und hält dadurch das Messer klemmend am Messerhaltebereich.

Bei einem weiteren gattungsgemäßen, in der Patentschrift US 5 348 065 offenbarten Werkzeugkopf sind Messer vorgesehen, die im Querschnitt aus zwei parallel und schräg versetzten Kantenbereichen und einem zwischenliegenden, dagegen geneigten Mittenbereich bestehen. Der Mittenbereich stößt V-förmig unter einem Winkel von mehr als 135° an den jeweiligen Kantenbereich an. Dadurch weist das Messer auf beiden gegenüberliegenden Hauptflächen je zwei Paare gegensinniger, aneinanderstoßender V-Anlageflächen auf, die mit entsprechend V-förmigen Gegenanlageflächen am Messerhaltebereich bzw. an einem Klemmstück so zusammenwirken, daß das Messer formschlüssig durch das Klemmstück gegen den Messerhaltebereich gedrückt und dadurch klemmend gehalten wird.

Allen oben erwähnten, herkömmlichen Werkzeugköpfen ist gemeinsam, daß das Messer von einem Klemmstück gehalten wird, welches durch eine oder mehrere, seitlich des Messers liegende Schraubverbindungen am Werkzeugkopf befestigt wird. Mithin drückt das Klemmstück nur mit einer Seite auf das Messer, so daß die Wirkungslinie der vom Klemmstück auf das Messer ausgeübten, festklemmenden Druckkraft seitlich neben der Wirkungslinie der Schraubbefestigung des Klemmstücks am Werkzeugkopf liegt.

In der Offenlegungschrift DE 33 14 127 A1 ist außer einem gattungsgemäßen Werkzeugkopf nach Art der oben zitierten US 5 348 065 ein nicht gattungsgemäßer Messerwerkzeugkopf offenbart, bei dem der obere Teil eines Füllstücks eines Werkzeugkopf-Grundkörpers einen Messerhalter bildet, an dem eine im Querschnitt rechteckförmige Erhöhung ausgebildet ist, die in eine entsprechende rechteckförmige Ausnehmung im Messer eingreift. Das Messer sowie ein in Drehrichtung hinter diesem angeordnetes Schleißblech sind jeweils von der Oberseite her mittels Schrauben am Messerhalter befestigt.

Bei einer in der Offenlegungsschrift DE 24 56 034 A1 beschriebenen Zerkleinerungsvorrichtung wird ein nicht gattungsgemäßer Messertyp verwendet, bei dem das Messer aus einem länglichen, im Querschnitt V-förmigen Plattenstück besteht, das an einer Stirnseite in Form einer V-förmigen Spitze endet, welche die Messerschneide bildet. Mehrere dieser V-förmigen Messer mit stirnseitiger Schneidkante sind in ein korrespondierendes Stufenprofil von werkzeugkopfseitigen Auflagerplatten eingelegt. Auf jedes Messer wird eine Klemmhülse oder ein Einspannkopf mit korrespondierend V-förmiger Anlagefläche aufgelegt und mittels einer Schraube am Werkzeugkopf-Grundkörper befestigt, wobei sie durch eine zu Messerverstellzwecken als Langloch ausgebildete Durchführungsöffnung des Messers hindurchgeführt ist.

Der Erfindung liegt als technisches Problem die Bereitstellung eines Messerwerkzeugkopfes der eingangs genannten Art derart zugrunde, daß das oder die Messer spielfrei und selbstzentrierend am Messerhaltebereich gehalten und relativ einfach ohne aufwendige Einstellarbeiten gewechselt werden können.

Die Erfindung löst dieses Problem durch die Bereitstellung eines Messerwerkzeugkopfes nach dem Anspruch 1.

Beim Werkzeugkopf nach Anspruch 1 sind die korrespondierenden Anlage- bzw. Kontaktflächen zwischen Messer und Messerhaltebereich von V-förmig gegeneinander geneigten Kontaktflächen am Messerhaltebereich einerseits und korrespondierend V-förmig gegeneinander geneigten Kontaktflächen am Messer andererseits gebildet, und das Befestigungsmittel zur Festlegung des. Messers am Messerhaltebereich hält das Messer, das mit einer oder, im Fall des Wendemessers, mit zwei gegenüberliegenden, senkrecht zur Querschnittsebene verlaufenden Messerschneiden versehen ist, mit einer Haltekraft, die charakteristischerweise im Bereich zwischen den V-förmig geneigten Anlageflächen auf das Messer einwirkt. Die Wirkungslinie dieser Haltekraft liegt somit in dem von den V-förmig geneigten Anlageflächen aufgespannten Winkelbereich, so daß sich durch die Wirkung der Haltekraft eine Selbstzentrierung des Messers beim Festlegen am Messerhaltebereich ergibt. Die zentrierte Messerposition ist dabei eindeutig durch die sich bezüglich der Haltekraftwirkungslinie gegenüberliegenden Paare zusammenwirkender, V-förmig geneigter Kontaktflächen definiert. Indem die Haltekraft zwischen diesen Paaren zusammenwirkender, V-förmig geneigter Kontaktflächen einwirkt, ergibt sich zudem eine gleichmäßige Kräfteverteilung auf diese Kontaktflächen und dadurch insgesamt eine günstige, gleichmäßige Befestigungskrafteinwirkung auf das Messer und den Messerhaltebereich. Diese charakteristischen Eigenschaften der Messerhalterung gewährleisten somit einen sicheren und spielfreien Halt des Messers am Werkzeugkopf auch unter Belastung im zerspanenden Betrieb und ermöglichen ein schnelles und einfaches Montieren des Messers mit hoher Wiederholgenauigkeit der Messerposition beim Einsetzen eines neuen Messers ohne aufwendige Einstellarbeiten.

Bei einem nach Anspruch 2 weitergebildeten Werkzeugkopf bestehen die Befestigungsmittel aus einem klemmstückfreien Direktbefestigungsmittel, worunter ein Befestigungsmittel zu verstehen ist, welches direkt das Messer mit dem Messerhaltebereich verbindet und z.B. durch eine oder mehrere Schraubverbindungen gebildet ist. Indem das Direktbefestigungsmittel am Messer selbst und nicht etwa an einem dieses einklemmenden Klemmstück angreift, erübrigt sich in diesem Fall ein solches Klemmstück.

Bei einem nach Anspruch 3 weitergebildeten Werkzeugkopf enden die Kontaktflächen nach außen hin unter Bildung eines entsprechenden Absatzes im wesentlichen senkrecht zu einer anschließenden freien Spanfläche des Messers. Damit läßt sich sehr zuverlässig das Eindringen von Spänen und Staubpartikeln zwischen Messer und Messerhaltebereich verhindern.

Bei einem nach Anspruch 4 weitergebildeten Werkzeugkopf schließend die V-förmig geneigten Kontaktflächen einen Winkel von weniger als 130° ein und ergeben durch diesen vergleichsweise steilen V-Winkel eine entsprechend zuverlässige Selbstzentrierfunktion.

Bei einem nach Anspruch 5 weitergebildeten Werkzeugkopf ist der V-Winkel für die messerseitigen Kontaktflächen geringfügig flacher gewählt als für die korrespondierenden Kontaktflächen des Messerhaltebereichs. Dies hat den erwünschten Effekt, daß das Messer mit seinen Kontaktflächen beim Montieren zunächst primär an den äußeren Endbereichen der V-Flanken gegen den Messerhaltebereich zur Anlage kommt und dann unter der Wirkung der Befestigungsmittel selbstzentierend in die von den Kontaktflächen des Messerhaltebereichs gebildete, V-förmige Aufnahme hineingedrückt wird. Dabei gibt das Material des Messers und/oder des Messerhaltebereichs in dem entsprechenden, geringfügigen Maße elastisch nach. Der Winkelunterschied der V-förmigen Kontaktflächen von Messer einerseits und Messerhaltebereich anderseits ist so gewählt, daß das fertig montierte Messer über die zusammenwirkenden V-förmigen Kontaktflächen gegen den Messerhaltebereich mit einer Anpreßkraft anliegt, die an den Endflanken der V-Kontaktflächen noch immer ausreichend hoch ist, um dort ein sicheres, spaltfreies Aneinanderliegen zu gewährleisten und damit ein Eindringen von Staubpartikeln zu verhindern.

Bei einem nach Anspruch 6 weitergebildeten Werkzeugkopf sind die beiden gegeneinander V-förmig geneigten Kontaktflächen am Messer und damit auch diejenigen am Messerhaltebereich mit gleichem Winkel zur Wirkungslinie der Haltekraft geneigt, mit der die Befestigungsmittel das Messer am Messerhaltebereich festhalten. Diese zur Haltekraft symmetrische Kontaktflächengestaltung begünstigt eine gleichmäßige Kräfteverteilung und damit einen sicheren Halt des Messers am Messerhaltebereich sowie die Selbstzentrierfunktion der Kontaktflächen.

Das Messer des Werkzeugkopfes nach Anspruch 7 ist auf seiner gegen den Messerhaltebereich eines Werkzeugkopfes anzulegenden Kontaktseite mit V-förmig geneigten Messerkontaktflächen dergestalt versehen, daß das Messer zur Montage am Werkzeugkopf nach einem der Ansprüche 4 bis 6 geeignet ist.

Der Messerwerkzeugkopf nach Anspruch 8 bildet einen separaten Messerhalter als Messerhaltebereich zur Aufnahme eines Messers und kann lösbar am Grundkörper eines Werkzeugkopfes nach einem der Ansprüche 4 bis 6 angebracht werden.

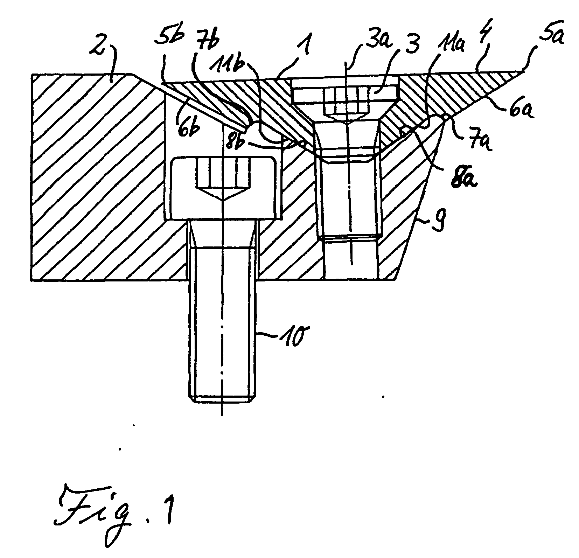

Eine vorteilhafte Ausführungsform der Erfindung ist in der Zeichnung dargestellt und wird nachfolgend beschrieben.
Die einzige Figur zeigt eine Längsschnittansicht einer Messer-Messerhalter-Anordnung eines im Betrieb rotierenden Messerwerkzeugkopfes.

In der Figur ist eine Messer-Messerhalter-Anordnung dargestellt, die Teil eines Zerspanungsmessersystems eines messerbestückten Rotationswerkzeugkopfes ist, wobei an dem im Betrieb rotierenden Werkzeugkopf in an sich bekannter Weise bevorzugt mehrere derartige Messer-Messerhalter-Anordnungen stirnseitig und/oder umfangseitig verteilt vorgesehen sind. Die Messer-Messerhalter-Anordnung beinhaltet ein Messer 1 vom Wendemessertyp, das an einem als separates Bauteil ausgeführten Messerhalter 2 montiert ist, der seinerseits mit einer oder mehreren Schraubverbindungen 10 an einem nicht gezeigten Werkzeugkopf-Grundkörper herkömmlicher Gestalt montiert werden kann und dadurch den Messerhaltebereich des Werkzeugkopfes zum Aufnehmen des jeweiligen Messers 1 bildet. Entsprechend dem Wendemessertyp besitzt das Messer 1 an gegenüberliegenden Schmalseitenkanten je eine Messerschneide 5a, 5b, die von den Seitenbereichen einer planen, messerhalterabgewandten Freifläche 4 und je einer dazu geneigt verlaufenden Spanfläche 6a, 6b des Messer 1 gebildet werden.

Der mittlere Bereich der messerhalterzugewandten Messerseite zwischen den Spanflächen 6a, 6b bildet den Kontaktflächenbereich, mit dem das Messer 1 gegen den Messerhaltebereich des Werkzeugkopfes in Form des Messerhalters 2 zur Anlage kommt und der charakteristischerweise aus zwei V-förmig gegeneinander geneigten Messerkontaktflächen 11a, 11b besteht. Im gezeigten Beispiel sind die Messerkontaktflächen 11a, 11b um einen Winkel von etwa 110° gegeneinander geneigt, alternativ sind auch andere Neigungswinkel kleiner als 180° möglich, vorzugsweise weniger als 130°. Korrespondierend dazu weist der Messerhalter 2 in seinem Messerkontaktberech zwei entsprechend V-förmig gegeneinander geneigte Halterkontaktflächen 8a, 8b auf, die eine trog- oder prismenförmige Aufnahme bilden, in der das Messer 1 mit seinen beiden Kontaktflächen 11a, 11b selbstzentrierend aufgenommen wird. Dabei ist der von den V-förmig geneigten Halterkontaktflächen 8a, 8b eingeschlossene Winkel geringfügig größer gewählt als derjenige der Messerkontaktflächen 11a, 11b, typischerweise um ein oder einige wenige Winkelgrad größer, z.B. 112° bei einem Winkel der Messerkontaktflächen 11a, 11b von 110°.

Symmetrisch im Mittenbereich zwischen den beiden V-förmig geneigten Messerkontaktflächen 11a, 11b ebenso wie zwischen den beiden V-förmig geneigten Halterkontaktflächen 8a, 8b sind eine oder mehrere Schraubverbindungen 3 als Direktbefestigungsmittel vorgesehen, mit denen das Messer 1 direkt und damit ohne Zuhilfenahme eines separaten Klemmstücks durch Verschraubung am Messerhalter 2 lösbar festgelegt wird. Die Längsachse 3a der jeweiligen Schraubverbindung 3, welche gleichzeitig die Wirkungslinie dieser direkten Messerbefestigung repräsentiert, bildet die Winkelhalbierende zwischen den beiden Messerkontaktflächen 11a, 11b ebenso wie zwischen den beiden Halterkontaktflächen 8a, 8b, d.h. die beiden zusammenwirkenden Messerkontaktflächen-Halterkontaktflächen-Paare liegen sich bezüglich der Haltekraft-Wirkungslinie 3a der jeweiligen Schraubverbindung 3 symmetrisch gegenüber.

In ihren von der oder den Messerbefestigungsschrauben 3 abgewandten, der jeweiligen Spanfläche 6a, 6b zugewandten Endbereichen sind die Messerkontaktflächen 11a, 11b und die Halterkontaktflächen 8a, 8b unter Bildung eines jeweiligen Absatzes 7a, 7b mit einer Krümmung dergestalt versehen, daß sie senkrecht zur angrenzenden Spanfläche 6a, 6b an diese anschließen. Dies verhindert wirksam ein Eindringen von Spänen oder Staubpartikeln zwischen das Messer 1 und den Messerhalter 2 im Betrieb des Werkzeugkopfes, in welchem die von der radial äußeren, freiliegenden, in der Figur rechten Schneide 5a gebildeten Späne über die zugehörige Spanfläche 6a abfließen und durch eine anschließende Spanbrecherfläche 9 am Messerhalter 2 gebrochen werden.

Die V-förmige Ausbildung der zusammenwirkenden Kontaktflächen 8a, 8b, 11a, 11b von Messer 1 einerseits und Messerhalter 2 andererseits hat erkennbar eine selbstzentrierende Funktion beim Montieren des Messers, so daß das Messer 1 nach Verschleiß der momentan aktiven, außenliegenden Schneidkante 5a schnell, einfach und mit hoher Wiederholgenauigkeit der Positionierung gewendet oder ausgewechselt werden kann, ohne daß aufwendige Einstellarbeiten notwendig sind. Das Messer 1 braucht lediglich mit seinen V-förmig geneigten Kontaktflächen 11a, 11b ohne genaue Justierung in die von den Halterkontaktflächen 8a, 8b gebildete Aufnahme eingelegt werden. Beim anschließenden Festschrauben des Messers 1 am Messerhalter 2 durch Eindrehen der einen oder mehreren Schrauben 3 zentriert sich dann das Messer 1 selbsttätig und kommt so ohne weiteres in seine gewünschte, exakte Position, zu deren Festlegung auch die Absätze 7a, 7b beitragen. Die Selbstzentrierungseigenschaft beruht mitentscheidend darauf, daß die beiden V-förmig gegeneinander geneigten Paare zusammenwirkender Kontaktflächen 8a, 11a bzw. 8b, 11b jeweils in einem spitzen Winkel zur Haltekraft-Wirkungslinie 3a geneigt sind, so daß die von der Befestigungsschraube 3 ausgeübte Haltekraft auf das Messer 1 an beiden zusammenwirkenden Kontaktflächenpaaren 8a, 11a bzw. 8b, 11b je eine zentrierend zur Haltekraft-Wirkungslinie 3a weisende Kraftkomponente parallel zu den Kontaktflächen 8a, 8b, 11a, 11b zur Folge hat. Die zur Wirkungslinie 3a der Messerschraubverbindung 3 symmetrische Lage der gegeneinanderliegenden Kontaktflächenpaare 8a, 11a bzw. 8b, 11b begünstigt zudem eine gleichmäßige Verteilung der von der Messerschraubverbindung 3 ausgeübten Haltekräfte.

Indem der V-Winkel der Halterkontaktflächen 8a, 8b etwas größer als derjenige der Messerkontaktflächen 11a, 11b gewählt ist, wie oben angegeben, wird der erwünschte Effekt erzielt, daß beim Montieren des Messers 1 dieses mit seinen Kontaktflächen 8a, 8b zunächst primär in derem äußerem, dem entsprechenden Absatz 7a, 7b zugewandten Bereich gegen die Halterkontaktflächen 8a, 8b anliegt. Mit Eindrehen der Befestigungsschraube 3 und der damit von dieser zunehmend erzeugten Haltekraft liegen die Messerkontaktflächen 11a, 11b zunehmend auch mit ihrem inneren, der Schraubverbindung 3 benachbarten Bereich gegen die korrespondierenden inneren Bereiche der Halterkontaktflächen 8a, 8b an, indem das Material des Messers 1 und/oder des Messerhalters 2 in entsprechend geringem Maß elastisch nachgibt.

Im gezeigten, fertig montierten Zustand liegen die Messerkontaktflächen 11a, 11b dann mit ziemlich gleichmäßig über ihre gesamte Flächenausdehnung hinweg verteilter Anpreßkraft nicht mehr nur im wesentlichen linienförmig, sondern flächig gegen die Halterkontaktflächen 8a, 8b an. Das Messer 1 ist somit satt anliegend und spielfrei am Messerhalter 2 fixiert. In jedem Fall ist der besagte V-Winkelunterschied zwischen den Messerkontaktflächen 11a, 11b und den Halterkontaktflächen 8a, 8b bevorzugt so gewählt, daß auch bei fertig montiertem Messer 1 die zusammenwirkenden Kontaktflächen 8a, 11a bzw. 8b, 11b in ihrem äußeren, den jeweiligen Absatz 7a, 7b bildenden Endbereich noch mit ausreichend großer Anpreßkraft und damit zuverlässig spaltfrei gegeneinander anliegen, um einem Eindringen von Spänen und Staubpartikeln zu begegnen. Weniger wichtig ist, ob im inneren, der oder den Messerschrauben 3 benachbarten Bereich die Kontaktflächenpaare 8a, 11a bzw. 8b, 11b mit einem ebenso hohen oder einem demgegenüber geringeren Anpreßdruck gegeneinander anliegen.

Der mit einer oder mehreren der gezeigten Messer-Messerhalter-Einheiten ausgerüstete Werkzeugkopf ist insbesondere für ein Zerspanungsmessersystem für die Bearbeitung von Rund- und Schnitthölzern sowie zum Hobeln, Fräsen oder Zerhacken von Holz und anderen zerspanbaren Werkstoffen einsetzbar. Es versteht sich, daß neben dem gezeigten Ausführungsbeispiel weitere Realisierungen der Erfindung möglich sind. So kann statt des gezeigten Wendemessers auch ein Messer mit nur einseitiger Schneidkante zum Einsatz kommen. Außerdem braucht der Messerhalter kein separat am Werkzeugkopf zu befestigendes Bauteil sein, sondern es kann gegebenenfalls ein entsprechender Messerhaltebereich direkt am Werkzeugkopf-Grundkörper angeformt sein. Des weiteren versteht sich, daß statt den gezeigten Schraubverbindungen jedes andere, dem Fachmann als gleichwertig bekannte Befestigungsmittel verwendet werden kann. Als weitere Alternative kann statt der das Messer direkt am Messerhalter festlegenden Schraubverbindung eine Klemmstückbefestigung vorgesehen sein, die ein am Messerhalter lösbar zu befestigendes Klemmstück beinhaltet, welches gegen die halterabgewandte Freifläche des Messers derart andrückt, daß es eine im Bereich zwischen den V-förmig geneigten Messerkontaktflächen bzw. Halterkontaktflächen einwirkende, das Messer gegen den Messerhalter andrückende Klemmkraft ausübt. Selbstverständlich kann erfindungsgemäß auch ein feststehender, messerbestückter Werkzeugkopf zum Einsatz kommen, an dem das bzw. die Messer in der oben für das Beispiel eines rotierenden Werkzeugkopfes beschriebenen Weise festgelegt sind und an den dann das jeweils zu bearbeitende Werkstück rotierend oder anderweitig bewegt herangefahren wird.

## Patentansprüche

1. Messerwerkzeugkopf, insbesondere Zerspanungsmesserwerkzeugkopf, mit
- einem Werkzeugkopf-Grundkörper mit wenigstens einem Messerhaltebereich (2), der im Querschnitt V-förmig geneigte Halterkontaktflächen (8a, 8b) aufweist, und
- wenigstens einem am jeweiligen Messerhaltebereich mittels eines zugeordneten Befestigungsmittels (3) lösbar befestigten Messer (1), das an wengistens einer von zwei senkrecht zur Messerquerschnittsfläche verlaufenden Seiten eine Messerschneide (5a, 5b) aufweist und mit korrespondierend im Querschnitt V-förmig geneigten Messerkontaktflächen (11a, 11b) gegen die V-förmig geneigten Halterkontaktflächen (8a, 8b) anliegt,
**dadurch gekennzeichnet, daß**
- das Befestigungsmittel (3) das Messer (1) mit einer im Bereich zwischen den V-förmig geneigten Kontaktflächen (8a, 8b; 11a, 11b) und damit zwischen den beiden senkrecht zur Querschnittsebene verlaufenden Messerseiten einwirkenden Haltekraft am Messerhaltebereich (2) hält.

2. Messerwerkzeugkopf nach Anspruch 1, weiter **dadurch gekennzeichnet, daß** das Befestigungsmittel aus einem klemmstückfreien Direktbefestigungsmittel (3) besteht, welches das Messer direkt mit dem Messerhaltebereich (2) verbindet.

3. Messerwerkzeugkopf nach Anspruch 1 oder 2, weiter **dadurch gekennzeichnet, daß** die Messerkontaktflächen (11a, 11b) und Halterkontaktflächen (8a, 8b) in einem an eine schneidenbildende Messerspanfläche (6a, 6b) angrenzenden Bereich nach außen hin unter Bildung eines Absatzes (7a, 7b) im wesentlichen senkrecht zur anschließenden Messerspanfläche enden.

4. Messerwerkzeugkopf nach einem der Ansprüche 1 bis 3, weiter **dadurch gekennzeichnet, daß** die V-förmig geneigten Messerkontaktflächen (11a, 11b) und Halterkontaktflächen (8a, 8b) einen Winkel von jeweils weniger als 130° einschließen.

5. Messerwerkzeugkopf nach einem der Ansprüche 1 bis 4, weiter **dadurch gekennzeichnet, daß** die V-förmig geneigten Messerkontaktflächen (11a, 11b) unter einem etwas kleineren Neigungswinkel geneigt sind als die Halterkontaktflächen (8a, 8b).

6. Messerwerkzeugkopf nach einem der Ansprüche 1 bis 5, weiter **dadurch gekennzeichnet, daß** die Messerkontaktflächen (8a, 8b) um etwa denselben Winkel bezüglich der Haltekraft-Wirkungslinie (3a) des Befestigungsmittels (3) geneigt sind.

7. Messerwerkzeugkopf nach einem der Ansprüche 4 bis 6,
**dadurch gekennzeichnet, daß** das Messer an einer seiner beiden Hauptseiten mit V-förmig unter einem Winkel von weniger als 130° gegeneinander geneigten Messerkontaktflächen (8a, 8b) versehen ist, welche Anlageflächen zum Anbringen des Messers am Werkzeugkopf bilden.

8. Messerwerkzeugkopf nach einem der Ansprüche 4 bis 6,
**dadurch gekennzeichnet, daß** ein Messerhalter lösbar am Werkzeugkopf-Grundkörper festlegbar ist und einen Messerhaltebereich mit um weniger als 130° gegeneinander geneigten Halterkontaktflächen (8a, 8b) bildet.

## Claims

1. Cutter head, in particular chipping cutter head, with
- a basic cutter head body with at least one knife mounting area (2) having holder contact surfaces (8a, 8b) inclined in a V-shaped cross-section, and
- at least one knife (1) detachably fixed to the respective knife mounting area by means of an assigned means of fixing (3) and having a knife cutting edge (5a, 5b) on at least one of two sides running perpendicular to the cross-sectional plane of the knife, and bearing with knife contact surfaces (Iia, Iib) correspondingly inclined in a V-shaped cross-section against the holder contact surfaces (8a, 8b) inclined in a Vshape,
**characterised in that**
the means of fixing (3) retain the knife (1) at the knife mounting area (2) with a retaining force acting between the contact surfaces (8a, 8b, lia, lib) inclined in a V-shape and hence between the two sides of the knife running perpendicular to the crosssectional plane.

2. Cutter head according to claim 1, further **characterised in that** the means of fixing comprise a direct, clamping-element-free means (3) of fixing, connecting the knife directly to the knife mounting area (2).

3. Cutter head according to claim 1 or 2, further **characterised in that** the knife contact surfaces (lia, lib) and holder contact surfaces (8a, 8b) terminate outwardly in an area adjacent to a knife tool face (6a, 6b) forming a cutting edge, with the formation of a shoulder (7a, 7b) essentially perpendicular to the adjoining knife tool face.

4. Cutter head according to one of claims 1 to 3, further **characterised in that** the contact surfaces (11a, 11b) and holder contact surfaces (8a, 8b) inclined in a V-shape in each case enclose an angle of less than 130°.

5. Cutter head according to one of claims 1 to 4, further **characterised in that** the knife contact surfaces (Iia, Ilb) inclined in a V-shape are inclined at a somewhat smaller angle of inclination that the holder contact surfaces (8a, 8b).

6. Cutter head according to one of claims 1 to 5, further **characterised in that** the knife contact surfaces (8a, 8b) are inclined by approximately the same angle in relation
to the line of application of the retaining force (3a) of the means of fixing (3).

7. Cutter head according to one of claims 4 to 6, **characterised in that** the knife on one of its two main sides is provided with knife contact surfaces (8a, 8b) inclined towards one another in a V-shape and at angle of less than 130°, the said contact surfaces forming bearing surfaces for attaching the knife to the cutter head.

8. Cutter head according to one of claims 4 to 6,
caracterized in that
a knife holder can be detachably fixed to the basic cutter head body and forms a knife mounting area with holder contact surfaces (8a, 8b) inclined towards one another by less than 130°.

## Revendications

1. Tête d'outil de coupe, en particulier tête d'outil d'enlèvement de copeaux, avec
- un corps de tête d'outil comprenant au moins une zone porte-couteau (2) qui présente en coupe transversale des surfaces de contact de maintien inclinées en forme de V (8a, 8b) et
- au moins un couteau (1) fixé de manière amovible à cette zone porte-couteau à l'aide d'un élément de fixation (3) correspondant, qui présente une lame de couteau (5a, 5b) sur au moins un des deux côtés perpendiculaires à la surface transversale du couteau et dont les surfaces de contact inclinées en forme de V (11a, 11b) en coupe transversale s'appuient sur les surfaces de contact de maintien inclinées en forme de V correspondantes (8a, 8b),
**caractérisée en ce que**
- l'élément de fixation (3) maintient le couteau (1) dans la zone porte-couteau (2) à l'aide d'une force de maintien qui s'exerce entre les surfaces de contact (8a, 8b, 11a, 11b) inclinées en forme de V, donc entre les deux côtés du couteau perpendiculaires au plan transversal.

2. Tête d'outil de coupe selon la revendication 1, également **caractérisée en ce que** l'élément de fixation est constitué d'un élément de fixation directe (3) sans pièce de serrage, qui relie le couteau directement à la zone porte-couteau (2).

3. Tête d'outil de coupe selon la revendication 1 ou 2, également **caractérisée en ce que** les surfaces de contact du couteau (11a, 11b) et les surfaces de contact de maintien (8a, 8b) s'arrêtent, vers l'extérieur, dans une zone contiguë à une surface de copeau (6a, 6b) constituant la coupe, en formant un rebord (7a, 7b) fondamentalement perpendiculaire à la surface de copeau suivante.

4. Tête d'outil de coupe selon l'une quelconque des revendications 1 à 3, également **caractérisée en ce que** les surfaces de contact du couteau (11a, 11b) inclinées en forme de V et les surfaces de contact de maintien (8a, 8b) forment une angle chaque fois inférieur à 130°.

5. Tête d'outil de coupe selon l'une quelconque des revendications 1 à 4, également **caractérisée en ce que** les surfaces de contact du couteau (11a, 11b) inclinées en forme de V sont inclinées selon un angle légèrement inférieur à celui des surfaces de contact de maintien (8a, 8b).

6. Tête d'outil de coupe selon l'une quelconque des revendications 1 à 5, également **caractérisée en ce que** les surfaces de contact du couteau (8a, 8b) sont inclinées selon le même angle que celui de la ligne d'application de la force de maintien (3a) de l'élément de fixation (3).

7. Tête d'outil de coupe selon l'une quelconque des revendications 4 à 6, **caractérisée en ce que** le couteau est pourvu, sur l'un de ses deux côtés principaux, de surfaces de contact de couteau (8a, 8b) inclinées en forme de V, l'une par rapport à l'autre, d'un angle inférieur à 130°, et qui forment des surfaces d'appui pour la fixation du couteau sur la tête d'outil.

8. Tête d'outil de coupe selon l'une quelconque des revendications 4 à 6, **caractérisée en ce que** un porte-couteau peut être fixé de manière amovible sur le corps de tête d'outil et constitue une zone de maintien du couteau pourvue de surfaces de contact de maintien (8a, 8b) inclinées l'une par rapport à l'autre selon un angle inférieur à 130°.
